# EUROPEAN PATENT APPLICATION

(11) **EP 3 438 436 A1**
(43) Date of publication of application: **06.02.2019**
(21) Application number: 18181317.1
(22) Date of filing: 03.07.2018
(51) Int. Cl.: F02K 3/06, B64D 29/02, B64D 33/04, F02K 1/78

(54) **DUCTED FAN GAS TURBINE ENGINE**

(30) Priority: 01.08.2017 GB 201712340
(71) Applicant: Rolls-Royce plc, London SW1E 6AT (GB)
(72) Inventor: Brooks, Richard, Derby, Derbyshire DE24 8BJ (GB); Green, Jeffrey, Derby, Derbyshire DE24 8BJ (GB)
(74) Representative: Rolls-Royce plc

(57) **Abstract**

A gas turbine engine (10) has a core engine (10) with an engine axis, a fan bypass duct (22) terminating in a bypass exhaust nozzle (23), and a pylon fairing (24) extending across the bypass duct (22) at a given angular position enclosing a pylon (101). The pylon fairing (24) has a leading edge inside the duct (100, 22) upstream of the bypass exhaust nozzle (23) and a trailing edge downstream of the bypass exhaust nozzle (23). The bypass duct (22) is notionally divided into first and second halves to either side of a plane at 90° to the given angular position and containing the engine axis. The first half is opposite to the pylon fairing (24). At the exhaust nozzle (102, 23) the flow area of the second half (22A, 22B) is substantially equal to that of the first half (22A, 22B)

## Description

### Field of the Present Disclosure

The present disclosure relates to a ducted fan gas turbine engine, and in particular to the configuration of the bypass duct of such an engine.

### Background

A ducted fan gas turbine engine has a fan bypass duct, which downstream from the fan itself typically hosts a row of outlet guide vanes followed by a pylon for attaching the core of the engine to an airframe. The pylon is enclosed in a fairing which extends radially across the bypass duct, for example at the top dead centre position of the duct in the case of an engine mounted to the underside of an aircraft wing.

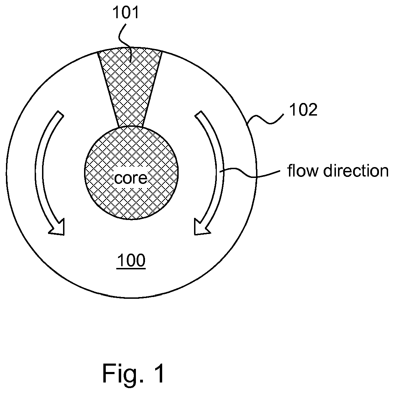

Due to the blockage in the bypass duct caused by the pylon fairing, the exhaust airflow at the exhaust nozzle of the bypass duct contains a component that is directed away from the angular position of the pylon. For example, as shown indicated with block arrows in Figure 1 for the case of a pylon 101 at the top dead centre position of the duct 100, this component is directed downwards at the exhaust nozzle 102, which results in a loss of engine performance. The non-axial flow is particularly pronounced in the slow, boundary layer flow next to the walls of the duct, and any separated flow. The pressure gradients due to pylon blockage result in complex secondary flow features, which may result in additional performance loss.

It would be desirable to reduce or avoid these performance losses.

### Summary

Accordingly, a gas turbine engine has a core engine located on an engine axis, a fan bypass duct surrounding the core engine and terminating in a bypass exhaust nozzle, and a pylon fairing extending across the bypass duct at a given angular position enclosing a pylon for attaching the core engine to an airframe of an aircraft. The pylon fairing has a leading edge inside the duct at a position upstream of the bypass exhaust nozzle and a trailing edge downstream of the bypass exhaust nozzle. The bypass duct can be notionally divided into first and second halves to either side of a plane at 90° to the given angular position and containing the engine axis such that the first half is opposite to the pylon fairing and the second half contains the pylon fairing, and such that at any given axial position the total flow area of the bypass duct is the combined flow areas of the two halves.

The gas turbine engine may have any one or, to the extent that they are compatible, any combination of the following optional features.

The bypass duct may be configured such that at the exhaust nozzle the flow area of the second half is substantially equal to that of the first half.

Increasing the flow area of the second half in this way allows the blocking effect of the pylon fairing to be countered. In particular the component of the exhaust airflow directed away from the angular position of the pylon fairing can be reduced or eliminated, improving engine performance.

The bypass duct may be configured such that the exhaust nozzle is circular, but with the centre of the exhaust nozzle offset from the engine axis in the direction of the angular position of the pylon fairing. Such an arrangement can be used to substantially equalise the flow areas of the first and second halves.

However, another possibility is for the bypass duct to be configured such that to the side of the first half the exhaust nozzle is a semi-circle that follows the locus of a first reference circle which is centred on the engine axis and whose plane is perpendicular to the engine axis, and wherein to the side of the second half the exhaust nozzle is a distorted semi-circle that is radially outside the locus of the first reference circle. This arrangement can also be used to substantially equalise the flow areas of the first and second halves, For example, the distorted semi-circle may progressively increase in radial distance from the locus of the first reference circle the closer a position on the distorted semi-circle approaches the angular position of the pylon fairing. However, particularly if space around that angular position is limited (e.g. because it is at top dead centre, and there is restricted space available at that position under an aircraft wing), then the distorted semi-circle may progressively increase in radial distance from the locus of the first reference circle the closer a position on the distorted semi-circle approaches one or more different angular positions.

Other configurations for the bypass duct which result in the flow area of the second half being substantially equal to or close to that of the first half are also possible.

To the side of the second half the exhaust nozzle typically has a position of maximum distance from the engine axis. Relative to a second reference circle which is centred on the engine axis, whose plane is perpendicular to the engine axis and which would have the same flow area as the exhaust nozzle, the distance from the engine axis of the position of maximum distance may be at least 1% greater (and preferably at least 2% greater) than the radius of the second reference circle. The distance from the engine axis of the position of maximum distance may be no more than 5% greater than the radius of the second reference circle.

Beneficial improvements in engine performance can be obtained by configuring the bypass duct such that only in the region of the exhaust nozzle is the flow area of the second half substantially equal to that of the first half. However, as the impact of the pylon fairing on airflow through the bypass duct commences at the leading edge of the fairing, further improvements can be obtained by similarly configuring the duct between the leading edge and the exhaust nozzle. Thus on each transverse cross-section through the bypass duct between the leading edge of the pylon fairing and the exhaust nozzle, the flow area of the second half may be substantially equal to the flow area of the first half.

### Brief Description of the Drawings

Embodiments of the present disclosure will now be described by way of example with reference to the accompanying drawings in which:
Figure 1 shows schematically a forward view on a transverse cross-section through a ducted fan gas turbine engine at the axial position of the exhaust nozzle of the bypass duct of the engine;
Figure 2 shows a longitudinal cross-section through a ducted fan gas turbine engine;
Figure 3 shows schematically a forward view on a transverse cross-section through the engine of Figure 2 at the axial position of the exhaust nozzle of the bypass duct of the engine; and
Figure 4 shows schematically a forward view on a transverse cross-section through a variant of the engine of Figure2 at the axial position of the exhaust nozzle of the bypass duct of the engine.

### Detailed Description

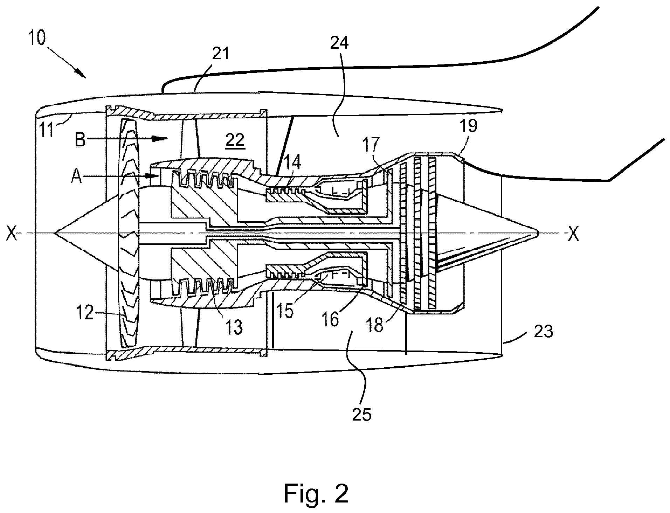

With reference to Figure 2, a ducted fan gas turbine engine is generally indicated at 10 and has a principal and rotational axis X-X. The engine comprises an air intake 11, a propulsive fan 12. It further comprises a core engine formed of an intermediate pressure compressor 13, a high-pressure compressor 14, combustion equipment 15, a high-pressure turbine 16, an intermediate pressure turbine 17, a low-pressure turbine 18 and a core engine exhaust nozzle 19. A nacelle 21 generally surrounds the engine 10 and defines the intake 11, a bypass duct 22 and a bypass exhaust nozzle 23.

During operation, air entering the intake 11 is accelerated by the fan 12 to produce two air flows: a first airflow A into the intermediate-pressure compressor 13 and a second airflow B which passes through the bypass duct 22 to provide propulsive thrust. The intermediate-pressure compressor 13 compresses the airflow A directed into it before delivering that air to the high-pressure compressor 14 where further compression takes place.

The compressed air exhausted from the high-pressure compressor 14 is directed into the combustion equipment 15 where it is mixed with fuel and the mixture combusted. The resultant hot combustion products then expand through, and thereby drive the high, intermediate and low-pressure turbines 16, 17, 18 before being exhausted through the nozzle 19 to provide additional propulsive thrust. The high, intermediate and low-pressure turbines respectively drive the high and intermediate-pressure compressors 14, 13 and the fan 12 by suitable interconnecting shafts.

A pylon fairing 24 at top dead centre extends radially across the bypass duct 22 and continues outside the duct in a generally upwards and rearwards direction. The fairing encases a pylon for attaching the core engine to the underside of an aircraft wing. In the context of a different engine position on an aircraft, however, the pylon fairing could be at a different angular position in the duct.

The engine may also have a secondary fairing 25 at bottom dead centre extending radially across the bypass duct 22. The trailing edge of the lower pylon finishes before the exhaust nozzle 23. The secondary fairing guides the second air flow B around a radial drive shaft and pipework of the engine.

The secondary fairing 25 is generally less bulky than the pylon fairing 24, and hence is significantly less disruptive of the air flow through the bypass duct 22.

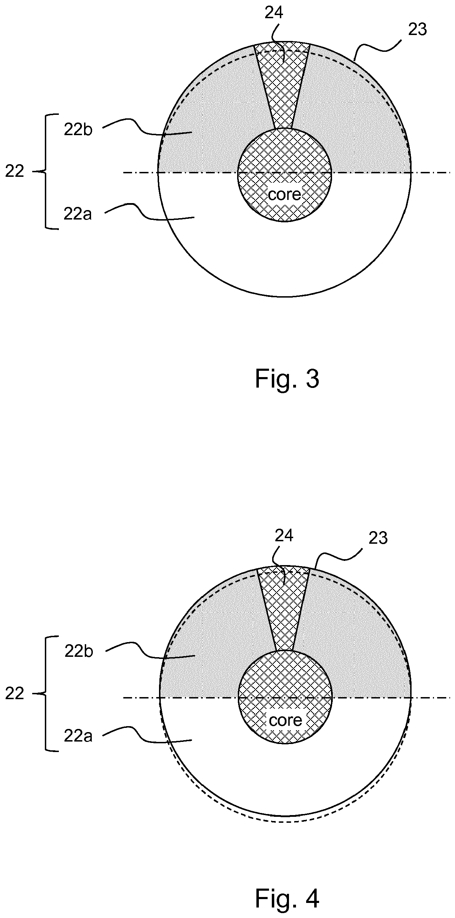

Figure 3 shows schematically a forward view on a transverse cross-section through the engine 10 at the axial position of the exhaust nozzle 23 of the bypass duct 22 of the engine. The pylon fairing 24 causes a blockage in the duct. However, unlike the duct 100 shown in Figure 1, the duct 22 is configured in such a way as to compensate for this blockage.

More particularly, the duct 22 can be thought as being formed in two halves. A first half 22a of the duct lies below the plane, indicated with a dot-dashed line, that is at 90° to the angular position (top dead centre) of the pylon fairing 24 and that contains the engine axis. A second half 22b of the duct lies above this plane and contains the pylon fairing. In Figure 3, the first half below the plane is left white and the second half above the plane is shaded grey.

To the side of the first half 22a, the exhaust nozzle 23 is a semi-circle that follows the locus of a first reference circle which is centred on the engine axis and whose plane is perpendicular to the engine axis. To the side of the second half 22b, the exhaust nozzle is a distorted semi-circle that is radially outside this locus. In the view of Figure 3, the locus of the first reference circle is indicated with a dashed line where it departs from the line of the exhaust nozzle 23.

The distorted semi-circular line of the exhaust nozzle 23 in the second half 22b is conveniently produced by "stretching" the locus of the first reference circle in the direction of the angular position of the pylon fairing 24. Thus the distorted semi-circle progressively increases in radial distance from the locus of the first reference circle the closer a position on the distorted semi-circle approaches top dead centre. However, any type of smooth curve can be used for the shape of the exhaust nozzle in the second half. For example, if space is limited at top dead centre (e.g. due to the presence of an aircraft wing), the "stretching" can be in directions to either side of top dead centre.

An effect of configuring the bypass duct 22 in this way is that at the exhaust nozzle 23 the flow area of the second half 22b can be made substantially equal to that of the first half 22a. Thus although the pylon fairing 24 still acts to give the airflow in the duct a downwards component, this is counteracted by the shape of the exhaust nozzle, which acts to give the airflow a cancelling upwards component. The flow areas may not be equal, but may be as close to equal as is practically possible given other design constraints.

Indeed, as the impact of the pylon fairing 24 on the airflow through the duct 22 may also be significant upstream of the exhaust nozzle 23, the reconfiguration of the duct to counteract the effect of the fairing may be applied to each transverse cross-section through the duct between the leading edge of the fairing and the exhaust nozzle. The exact configuration of the duct can also be adjusted to address other factors, such as the effect on the flow in the duct of the secondary fairing 25.

The exhaust nozzle 23 as shown in Figure 3 has a position of maximum distance from the engine axis at top dead centre. When considering typical degrees of distortion of the exhaust nozzle, it is helpful to consider a second reference circle which is also centred on the engine axis, and whose plane is also perpendicular to the engine axis. However, the second reference circle is sized so that it would have the same flow area as the exhaust nozzle, and thus is larger than the first reference circle. Relative to this second reference circle, the distance from the engine axis of the position of maximum distance may be at least 1% or 2% greater, but is preferably no more than 5% greater, than the radius of the second reference circle.

Figure 4 shows schematically a forward view on a transverse cross-section through a variant the engine 10 at the axial position of the exhaust nozzle 23 of the bypass duct 22 of the engine. In the variant, the exhaust nozzle is circular but has its centre offset from the engine axis in the direction of the angular position of the pylon fairing 24. Thus in this case, the line of the exhaust nozzle departs from the locus of the first reference circle (indicated with a dashed line) in both the first 22a and the second 22b halves of the duct. However, again the overall effect is that at the exhaust nozzle the flow area of the second half of the duct is substantially equal to that of the first half.

As the configuration of the duct 22 involves an offset of the exhaust nozzle 23 rather than a distortion of the nozzle, in this variant the first and second reference circles are identical. However, the nozzle as shown in Figure 4 still has a position of maximum distance from the engine axis at top dead centre and, as with the nozzle of Figure 3, the distance from the engine axis of the position of maximum distance may be at least 1% or 2% greater, but preferably is no more than 5% greater, than the radius of the second reference circle.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the spirit and scope of the invention.

## Claims

1. A gas turbine engine (10) having a core engine located on an engine axis (X-X), a bypass duct (22) surrounding the core engine and terminating in a bypass exhaust nozzle (23), and a pylon fairing (24) extending across the bypass duct at a given angular position enclosing a pylon for attaching the core engine to an airframe of an aircraft, the pylon fairing having a leading edge inside the duct at a position upstream of the bypass exhaust nozzle and a trailing edge downstream of the bypass exhaust nozzle;
wherein the bypass duct is notionally divided into first (22a) and second (22b) halves to either side of a plane at 90° to the given angular position and containing the engine axis such that the first half is opposite to the pylon fairing and the second half contains the pylon fairing, and such that at any given axial position the total flow area of the bypass duct is the combined flow areas of the two halves; and
wherein the bypass duct is configured such that at the exhaust nozzle the flow area of the second half is substantially equal to that of the first half.

2. The gas turbine engine according to claim 1, wherein the exhaust nozzle is circular, the centre of the exhaust nozzle being offset from the engine axis in the direction of the angular position of the pylon fairing to substantially equalise the flow areas of the first and second halves.

3. The gas turbine engine according to claim 1, wherein to the side of the first half the exhaust nozzle is a semi-circle that follows the locus of a first reference circle which is centred on the engine axis and whose plane is perpendicular to the engine axis, and wherein to the side of the second half the exhaust nozzle is a distorted semi-circle that, in order to substantially equalise the flow areas of the first and second halves, is radially outside the locus of the first reference circle.

4. The gas turbine engine according to claim 3, wherein the distorted semi-circle progressively increases in radial distance from the locus of the first reference circle the closer a position on the distorted semi-circle approaches the angular position of the pylon fairing.

5. The gas turbine engine according to any one of the previous claims, wherein to the side of the second half the exhaust nozzle has a position of maximum distance from the engine axis, and wherein, relative to a second reference circle which is centred on the engine axis, whose plane is perpendicular to the engine axis and which would have the same flow area as the exhaust nozzle, the distance from the engine axis of the position of maximum distance is at least 1% greater than the radius of the second reference circle.

6. The gas turbine engine according to claim 5, wherein the distance from the engine axis of the position of maximum distance is no more than 5% greater than the radius of the second reference circle.

7. The gas turbine engine according to any one of the previous claims, wherein on each transverse cross-section through the bypass duct between the leading edge of the pylon fairing and the exhaust nozzle, the flow area of the second half is substantially equal to the flow area of the first half.

8. A gas turbine engine (10) having a core engine located on an engine axis (X-X), a bypass duct (22) surrounding the core engine and terminating in a bypass exhaust nozzle (23), and a pylon fairing (24) extending across the bypass duct at a given angular position enclosing a pylon for attaching the core engine to an airframe of an aircraft, the pylon fairing having a leading edge inside the duct at a position upstream of the bypass exhaust nozzle and a trailing edge downstream of the bypass exhaust nozzle;
wherein the bypass duct is notionally divided into first (22a) and second (22b) halves to either side of a plane at 90° to the given angular position and containing the engine axis such that the first half is opposite to the pylon fairing and the second half contains the pylon fairing, and such that at any given axial position the total flow area of the bypass duct is the combined flow areas of the two halves; and
wherein the exhaust nozzle is circular and the centre of the exhaust nozzle is offset from the engine axis in the direction of the angular position of the pylon fairing.

9. A gas turbine engine (10) having a core engine located on an engine axis (X-X), a bypass duct (22) surrounding the core engine and terminating in a bypass exhaust nozzle (23), and a pylon fairing (24) extending across the bypass duct at a given angular position enclosing a pylon for attaching the core engine to an airframe of an aircraft, the pylon fairing having a leading edge inside the duct at a position upstream of the bypass exhaust nozzle and a trailing edge downstream of the bypass exhaust nozzle;
wherein the bypass duct is notionally divided into first (22a) and second (22b) halves to either side of a plane at 90° to the given angular position and containing the engine axis such that the first half is opposite to the pylon fairing and the second half contains the pylon fairing, and such that at any given axial position the total flow area of the bypass duct is the combined flow areas of the two halves; and
wherein to the side of the first half the exhaust nozzle is a semi-circle that follows the locus of a first reference circle which is centred on the engine axis and whose plane is perpendicular to the engine axis, and wherein to the side of the second half the exhaust nozzle is a distorted semi-circle that is radially outside the locus of the first reference circle.

10. A ducted fan gas turbine engine according to claim 9, wherein the distorted semi-circle progressively increases in radial distance from the locus of the first reference circle the closer a position on the distorted semi-circle approaches the angular position of the pylon fairing.
